# EUROPEAN PATENT SPECIFICATION

(11) **EP 2 545 773 B1**
(45) Date of publication and mention of the grant of the patent: **09.04.2014**
(21) Application number: 11174220.1
(22) Date of filing: 15.07.2011
(51) Int. Cl.: A01M 1/02, A01M 29/12

(54) **Vermin repellent arrangement and method for repelling at least one type of vermin**
Schädlingsabwehrende Anordnung und Verfahren zum Abwehren von mindestens einer Schädlingsart
Agencement de répulsif de nuisibles et procédé de répulsion d'au moins un type de nuisibles

(43) Date of publication of application: 16.01.2013
(73) Proprietor: AMS AG, 8141 Unterpremstätten (AT)
(72) Inventor: Heugle, John, 8054 Seiersberg (AT); Faschinger, Franz, 8054 Seiersberg (AT)
(74) Representative: Epping - Hermann - Fischer

(56) References cited:
- WO-A1-2006/128932
- WO-A1-2010/125141
- WO-A2-2004/010762
- US-A- 5 241 778
- US-A1- 2003 152 603

## Description

The invention is related to a vermin repellent arrangement and to a method for repelling a vermin, particularly a specified type of vermin.

While in middle or northern European countries vermin and pests are often considered as annoyance only, in many other countries vermin are a vector for spreading diseases, causing significant loss on human lives and severe damage to economy.

For example, malaria, which is a mosquito-borne infectious disease of humans, remains a scourge in tropical and subtropical regions, including much of sub-Saharan Africa, Asia and Americas killing around one million people each year. The disease itself is spread by a mosquito and in particularly by the bites of female mosquitoes feeding on the blood of human beings. Although vaccine is currently tested, it may be unreliable and/or too expensive for many people to afford, particularly in those regions most affected by the disease. Tsetse flies on the other hand are considered to be a vector for the human African trypanosomiasis, the so-called sleeping sickness.

Up to this date, current prevention techniques have not been able to eradicate or significantly control the spreading of the diseases by reducing the number of mosquitoes. Recent controlled studies conducted to date by independent investigators found that vermin being a vector of disease agents comprised merely a few percentage of the daily catch or an entire season. Therefore, an area wide and indifferent dispersion or disposition of repellent may be ineffective and/or harm also useful insects.

Document US 2003/152603 shows an arrangement for detecting and eradicating insects. The arrangement that is placed in an open room comprises a container which is filled with insect extermination spray, a control with a microphone for detecting wing sound of an insect, and a valve for spraying the spray contained in the container in respect to a detected insect.

As such, there is still a need for arrangement and methods providing improved repellent capabilities to reduce the risk for humans to be bitten.

This and other objects are solved by the presently independent apparatus and method claims. Embodiments and further aspects are subject matter of the dependent claims. In this respect the term "vermin" reflects any type of pest or more general any type of insect, particularly but not limited to flying insects.

The vermin repellent arrangement proposes detection means for detecting a specific pre-defined type of vermin in a first area. Particularly, the detection means comprise means for acoustically detecting a vermin in said first area and providing a first detection signal in the response thereto. Evaluation means coupled to the detection means are adapted to receive the first detection signal and provide a repellent control signal in response to an evaluation. For instance, these means may evaluate the first detection signal and a reference signal, wherein the reference signal is assigned to at least one pre-defined type of vermin. If a concurrence or correlation is determined between the first detection signal provided by the detection means and the reference signal, the pre-defined type of vermin is considered to be positively identified and a dosage of a repellent compound is released into the area the vermin is currently staying in.

The detection of a specific pre-defined type of vermin in a specified area reduces the overall amount of repellent dosage to be vaporized and prevents or at least reduces killing of useful insects.

In a further embodiment a low power scent system may be used to provide a concentrated scent of human sweat, carbon dioxide or blood vapor to attract a pre-defined type of vermin, for instance female mosquitoes to a pre-ordained area. Alternatively a different compound may be used to attract a type of vermin. Once within the area, the attracted vermin may be identified by the detection and evaluation means. For this purpose, the detection means may comprise a microphone, particularly a stereo microphone arranged to detect the sound of the wing beats of vermin in the pre-ordained area. The use of a stereo microphone allows obtaining direction or distance of the detected vermin. In this respect, the term "sound" reflects any acoustic information generated by at least one type of vermin.

The evaluation means may evaluate this sound and compare the detected sound with a pre-defined sound, for instance with a wing beat sound of a specific type of vermin. The evaluation means may comprise a filter having a passband characteristics corresponding to a wing beat sound of the at least one pre-defined type of vermin. The evaluation means make use of the fact that each type of vermin may comprise a different spectral characteristic of its wing beat sound. Even female and male vermin may comprise different characteristics and as such they can be identified by their wing beat sound characteristic.

In an embodiment the evaluation means are adapted to compare at least a portion of a frequency spectrum of the detection signal with a frequency spectrum of a wing beat sound of the at least one pre-defined type of vermin. In another embodiment the evaluation means may comprise a comparator to provide the repellent control signal in response to a comparison of the processed and preferably filtered detection signal and the reference signal. If the processed and filtered detection signal exceeds the reference signal, the detected type of vermin corresponds to the pre-defined type and is further considered to be at a distance in reach of the repellent dosage.

The repellent dosage may be vaporized into a preferred direction within the pre-ordained area covered by the detection means. In this respect the term "vaporizer" means every device or apparatus capable and adapted for releasing an amount of compound into an area. It may comprise a nozzle, sprayer, atomizer and the like driven by mechanical, electrical, electro-mechanical or other means.

To attract the pre-defined type of vermin, the arrangement may comprise a storage coupled to a second vaporizer to provide a vapor of a compound attractive to the at least one pre-defined type of vermin. A small dosage may be vaporized to attract the pre-defined type of vermin in response to an attraction control signal. Said attraction control signal may be provided within a pre-defined time period or in response to a general detection of vermin within the pre-ordained area.

In a further embodiment, the arrangement may comprise additional detection means, particularly optical or acoustical detection means to detect vermin in a second area. Said second area may at least comprise a portion of the pre-ordained area. A second detection signal is provided in response thereto. The attraction control signal may now be provided by the evaluation means in response to the second detection signal.

A method for repelling at least one type of vermin comprises detecting sound generated by a vermin in a pre-ordained area and providing a recorded signal thereof. In particular, the sound may be the wing beat sound or any sound generated by wings or its elytron. The recorded signal is evaluated and may be compared with a reference signal, wherein the reference signal is signed to at least one pre-defined type of a vermin. Upon correlation or consistency between the recorded signal and the reference signal a repellent dosage is vaporized within the pre-ordained area.

In a further aspect detecting sound of the vermin comprises detecting the wing beat sound of the vermin in a pre-ordained area and in response thereto vaporizing a dosage of a compound attractive to the at least one pre-defined type of vermin.

Detecting the vermin comprise an optical detection or an acoustical detection.

As an alternative or in addition to vaporizing a dosage of a repellent compound, the identified vermin could be eliminated by use of a small laser or the proboscis of the vermin could be sealed as the vermin tries to draw a fluid from a trap. For this purpose, a membrane could be used which clocks the proboscis of the vermin.

The present invention is now explained in greater detail with a reference to the accompanying drawings, in which:
- Figure 1: illustrates a first exemplary embodiment of a vermin repellent arrangement,
- Figure 2: shows an embodiment of the evaluation means according to the embodiment of figure 1,
- Figure 3: illustrates a second embodiment of the arrangement according to the proposed principle,
- Figure 4: shows an embodiment of the processor according to the embodiment of figure 3,
- Figure 5: shows another embodiment of the vermin repellent arrangement,
- Figure 6: illustrate yet another embodiment of a vermin repellent arrangement,
- Figure 7: illustrates a first embodiment of a method for repelling at least one type of vermin and,
- Figure 8: shows a second embodiment of a method for repelling at least one type of vermin.

The following examples and embodiments are illustrated models and do not reflect correct dimensions or specific arrangements unless otherwise stated. The different aspects of the embodiments can be combined with each other by a person skilled in the art. For example the evaluation means shown in the figures are not restricted to the respective embodiment. Rather, they or their features can be combined by person skilled in the art. It should be noted that elements or features with similar functions bear similar or same reference signs.

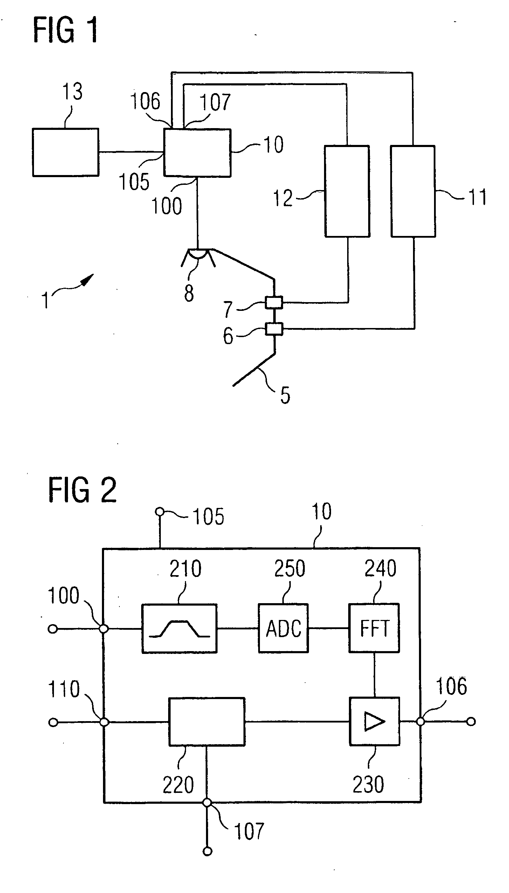

Figure 1 illustrates an embodiment of a vermin repellent apparatus according to the present invention. The apparatus 1 comprises two storage containers 11 and 12, wherein the first storage container 11 comprises a vermin repellent compound. In this example, the vermin repellent compound may be chosen to specifically repel a pre-defined type of vermin. As such, the compound may be vermin specific. The second storage 12 comprises a compound, which is attractive to the pre-defined type of vermin. For example storage container 12 may comprise a chemical compound similar to human sweat, carbon dioxide and blood. If vaporized via a vaporizer 7 said chemical composition may attract an insect, for example a female mosquito to shield arrangement 5 and the area covered by the arrangement. The attractant area may contain an artificial face or other body part, where the vermin can hover and/or land.

Shield arrangement 5 also comprises vaporizer 6, which is coupled to the first storage container 11. Shield 5 also comprises on one side a stereo microphone 8, which is coupled to a processor 10. Processor 10 evaluates signals from stereo microphone 8. Microphone 8 is particularly sensitive in a frequency range, which comprises frequency portions of a sound, e.g. a wing beat sound of a specified type of vermin to be repelled. Stereo microphone 8 allows not only to identify the type of vermin via recordation of the wing beat sound, but also to evaluate direction and distance to vaporizers 6 and 7. For this purpose, processor 10 receives the signal of microphone 8 at input terminal 100. Processor 10 evaluates the signal received by stereo microphone 8 and compares the received signal with one or more reference signals. Those reference signals correspond to sounds of the pre-defined type of vermin.

For instance, stereo microphone 8 records the wing beat of a vermin, particularly a mosquito. Likewise processor 10 provides a reference signal corresponding to the wing beat sound of the mosquito. Upon comparison of the recorded signal and the reference signal processor 10 evaluates and identifies the type of vermin within the area covered by stereo microphone 8 and vaporizers 7 and 6. If the recorded wing beat corresponds to the pre-defined type of vermin, processor 10 will send an attraction control signal to storage 12 to release a further dosage of attractive compound. If successful, the vermin closes the distance to vaporizer 7, which may cause an increased level of the wing beat sound recorded by stereo microphone 8 or any other pre-defined change. Processor 10 evaluates via recorded signal again and upon evaluation, for instance upon evaluating direction and distance processor 10 provides a repellant control signal at output 106 to storage 11. In response thereto storage 11 releases a repellent compound via vaporizer 6.

Processor 10 as well as all other electrical devices are supplied by a battery 13 coupled to supply terminal 105. Instead of a battery 13, any other energy storage or power supply may be used. For example, a solar cell could be used to charge a battery pack for use of the arrangement during night time.

By acoustically identifying the predetermined type of vermin, for example a female mosquito or a tsetse fly or any other vermin potentially causing harm to human beings or spreading diseases, the overall amount of repellent dosage can be reduced significantly. Particularly, the repellent dosage will be vaporized only at a time, at which the identified vermin is close to vaporizer 6. For attracting the respective type of vermin the second vaporizer 7 with the second storage 12 is used.

Figure 2 shows an example of processor 10 which is capable of identifying several different types of vermin. Processor 10 comprises a first input terminal 100 which is coupled to the stereo microphone to receive an acoustic detection signal. Said detection signal is applied to a filter 210 having a passband characteristic. The passband is selected to be in a range also comprising the sounds, e.g. the wing beat sounds of the types of vermin to be repelled. The filtered signal is applied to an analog to digital converter 250 to obtain a digital signal thereof. The digital signal is applied to an FFT to obtain the frequency portions of the recorded and filtered signal. The output of the FFT 240 is coupled to a comparator 230. A second input terminal of comparator 230 is connected to storage 220. The memory storage comprises stored data representing one or more frequency spectrum of pre-defined types of vermin to be repelled. For instance memory 220 may comprise data representing the frequency spectral characteristic of a female mosquito or a tsetse fly and the like. It may also comprise spectral characteristics of other types of vermin for statistical purposes. Any characteristic can be stored in memory 220 via interface 110.

In response to a comparison of the frequency characteristic of the recorded signal with the stored signal in memory 220, processor 10 provides a control signal at terminal 106 to release or spray a respective dosage of the repellent compound. Memory 220 is also coupled to terminal 107 for releasing an attractive compound within pre-defined time periods.

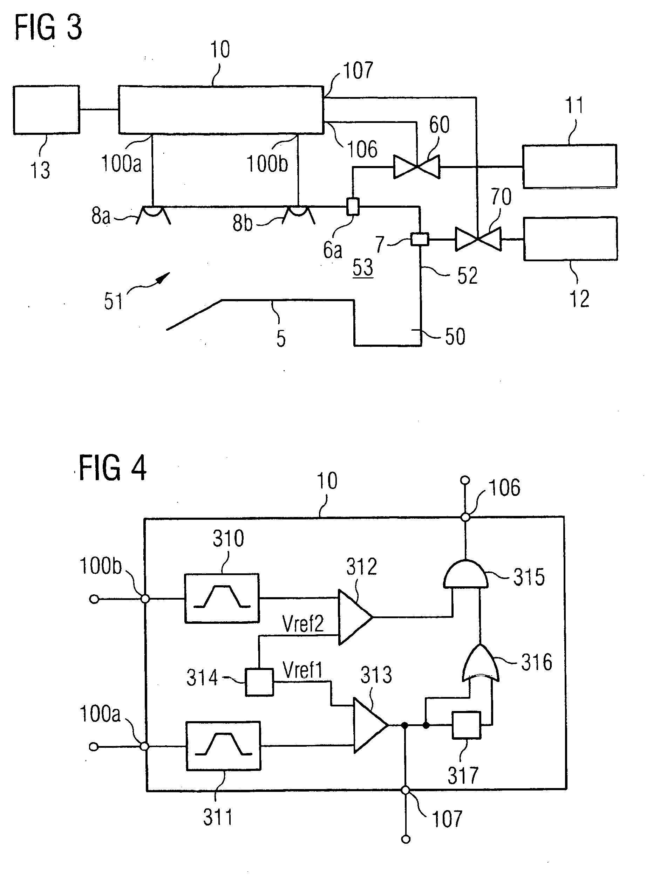

Figure 3 shows a vermin repellent arrangement according to the invention. The arrangement comprises a shield 5 with an open area 51 and a releasable container 50. Container 50 comprises any eliminated/dead vermin after operation of the arrangement. Close to container 50, at the back side 52 of shield 5, the vaporizer 7 is arranged. Vaporizer 7 is coupled to controllable valve 70 for releasing and spraying an attractive compound stored in storage 12.

Second vaporizer 6a is arranged vis-à-vis container 50 and directed into an area of shield 50 above container 50. Vaporizer 6a is connected to controllable valve 60 for releasing a small amount of a repellent dosage from storage 11. A vermin within the area is directly sprayed and eliminated and drops into container 50.

A first microphone 8a is arranged close to area 51 and the open end of shield 5. Microphone 8a is connected to input terminal 100a of processor 10. A second microphone 8b is arranged close to area 53 and coupled to a second input terminal 100b of processor 10. Processor 10 and the microphones as well as all other electrical devices are supplied by a battery 13, which also includes a solar cell for recharging the battery.

In operation of the arrangement, the wing beat sound of a vermin close to area 51 is recorded via microphone 8a and received by processor 10. Processor 10 evaluates this signal and evaluates whether the recorded sound corresponds to a respective wing beat of a predetermined type of vermin. If so it activates valve 70 via a respective control signal through terminal 107 to release a small amount of attractive dosage into area 53 of shield 5. The vermin in area 51 is now attracted by said attractive compound into area 53. Upon moving from area 51 to area 53, the level of the recorded wing beat is decreasing at microphone 8a while at the same time increasing at microphone 8b.

The wing beat sound may be identified again by processor 10 and upon exceeding a pre-defined threshold, processor 10 provides a control signal at terminal 106 to open valve 60. A small amount of repellent dosage is released and sprayed into area 53, the area which now presumably contains the vermin. The sprayed vermin is eliminated and drops into container 50.

In this respect, figure 4 illustrates an embodiment of processor 10 which provides an identification circuitry for a specific type of vermin. As mentioned before, a pre-defined type of vermin can be identified by a specific characteristic of its sound, e.g. its wing beat sound. Such wing beat sound may comprise a characteristic fundamental frequency and harmonics. For example, wing beat sound of a female mosquito is different from a wing beat sound of a male mosquito or other vermin. To identify such wing beat, processor 10 comprises two filters 310 and 311, each of them having a bandpass characteristic. Filter 310 is coupled to terminal 100b to filter the recorded signal of microphone 8b, while filter 311 is connected to input terminal 100a.

The passband of each filter corresponds to the frequency spectrum of the sound of a female mosquito. The output terminal of filter 311 is connected to a first input terminal of a first comparator 313. A second input terminal of the first comparator 313 is coupled to a reference signal source 314. First comparator 313 is connected to output terminal 107 for providing the control signal to release a small dosage of attractive compound. The output of the first comparator 313 is also coupled to a delay line 317 and to a logic OR gate 316.

The output of filter 310 is connected to a first input terminal of a second comparator 312. A second input terminal of the second comparator 312 is coupled to the reference signal source 314. The output of the second comparator is connected to an input of logic AND gate 315 the output of that logic gate providing the control signal for releasing an amount of the repellent compound.

In operation, a signal recorded by microphone 8a is applied to input terminal 100a and filtered via bandpass filter 311. Comparator 313 provides a respective output signal upon comparison of the filtered signal with a first reference signal Vref1. If the filtered signal exceeds the threshold of reference signal Vref1, comparator 313 provides a control signal at terminal 107 to release the attractive compound via vaporizer 7 into area 53. Further, the signal is applied to logic OR gate 316 and to delay unit 317. The delay unit 317 is used to take the time period into account, which is required for the chemical compound to dispense within area 53 and to attract the vermin located close to area 51 into area 53.

When flying or generally moving from area 51 to area 53, the signal level recorded by microphone 8a decreases and the signal level may drop below the threshold of Vref1. However, logic gate 316 will still provide a logic high signal at its output due to the delay unit 317 indicating a vermin is in proximity.

At the same time, the level of the recorded signal at terminal 100b increases and is filtered by filter 310. The filtered signal is now compared at comparator 312 with a second threshold reference signal Vref2. Upon exceeding the second reference signal Vref2, comparator 312 provides a respective output signal to logic AND gate 315. If both input signals at gate 315 are considered high, gate 315 generates the control signal to spray a repellent dosage into area 53, thereby eliminating any vermin within the area.

The use of two microphones 8a and 8b provides the possibility to obtain direction and movement information of a predetermined type of vermin. Of course, instead of two different microphones 8a and 8b also a stereo microphone can be used as well.

Further, it is also possible to replace microphone 8a with any other kind of identification and detection means. For example, microphone 8a could be replaced by an optical detection means for detecting any type of the vermin within area 51. To this extent, the passband characteristic of filter 311 could be implemented in a more general and not vermin type specific way to generally detect plurality types of vermin.

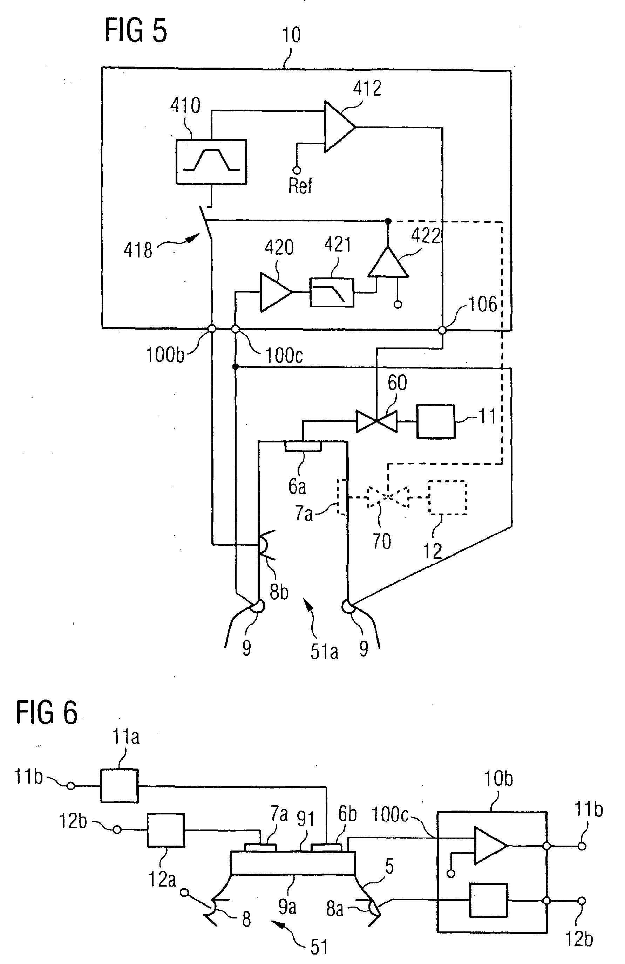

Figure 5 illustrates another embodiment of the present invention, in which shield 5 has the shape of a hollow cylinder with an opening area 51a facing downwards. Close to opening area 51a one or more optical detectors 9 are arranged for optical detection of a vermin. In the side wall of the hollow cylinder a stereo microphone 8b is arranged close to an area covered by a vaporizer 6a. The stereo microphone may detect not only any sound itself, but also direction. Optionally, a second vaporizer 7a for spraying an attractive compound into that area is inserted vis-à-vis stereo microphone 8b.

Processor 10 of this arrangement comprises a first input terminal 100b for signals recorded by stereo microphone 8b and a second input terminal 100c for receiving detection signals from optical sensors 9. Processor and evaluation means 10 further comprise an amplifier 420 coupled to input terminal 100c for amplifying an optical detection signal. Amplifier 420 is connected upstream to low pass filter 421 for filtering and identifying the vermin within area 51a. Filter 421 provides a signal to a comparator 422 which compares the optical detection signal with a reference signal. Upon exceeding the threshold comparator 422 provides a control signal to switch 418, said switch connected to terminal 100b. Optionally, it provides a control signal to valve 70 for releasing a dosage of an attractive compound into the hollow cylinder.

Upon providing the control signal by comparator 422, filter 410 and comparator 412 are activated. Further, switch 418 is closed thereby coupling terminal 100b to filter 410. Filter 410 is a bandpass filter filtering the signal of the recorded wing beat of the vermin and compares the filtered signal in comparator 412 with a reference signal. In response to the comparison valve 60 and a vaporizer 6a is activated releasing a dosage of a repellent compound.

The control signal outputted by comparator 422 reduces the overall power consumption, as the microphone 8b as well as other portions of evaluation means 10 are activated only upon detecting a vermin within area 51a by means of comparator 422. Hence a battery life can be extended.

In this embodiment, two optical sensors 9 are used to detect a vermin within area 51a. Of course, the optical sensors can be replaced by an acoustical sensor, for instance a microphone or any other means to detect movement or a vermin within area 51a.

In addition to the chemical attraction means with vaporizer 7a, valve 70 and storage 12, other attraction means like optical attraction means can be used as well. For instance, an infrared source can be arranged onto the side wall providing an infrared signal similar to the human emitted infrared spectrum.

Figure 6 illustrates an alternative for vermin repellent arrangement. In this embodiment, screen 5 with an open area 51 facing downwards comprises one or two microphones 8, 8a arranged such that they are able to record any sound signals generated by vermin within area 51.

At the upper end of area 51, a membrane 9a is arranged forming a capacitive element with upper layer 91. For this purpose, membrane 9a is coupled to terminal 100c of evaluation means 10b. In addition, vaporizer 7a for releasing an attractive compound is coupled to storage 12b and to evaluation means 10b for receiving a respective release control signal. A further vaporizer or spraying element 6b is arranged close to membrane 9a and connected to storage 11a. That storage comprises a compound which may also include components attractive to the pre-defined type of vermin, like for instance the female mosquito. However, the compound also comprises a material potentially sealing the proboscis of the vermin.

If microphones together with processor 10 detect and positively identify a vermin, and more specifically a predetermined type of vermin, evaluation means 10b generate an attraction control signal releasing a small dosage of an attractive compound from storage 12a via vaporizer 7a. At the same time, membrane 9a and facing upper layer 91 are applied with a respective voltage. If the vermin now tries to reach the potential food source, it may land on membrane 9a sticking its proboscis through membrane 9a. The vermin on the surface and the proboscis may cause the change in the capacitance between membrane 9a and plate 91, which can be detected by evaluation means 10b. Upon such detection, the evaluation means generate a control signal for releasing a small amount of a compound from storage 11a via vaporizer 6b. The compound is drawn by the vermin potentially sealing its proboscis. For this purpose, the compound may comprise an adhesive or any other material clocking the proboscis while the vermin tries to draw food or blood through membrane 9a.

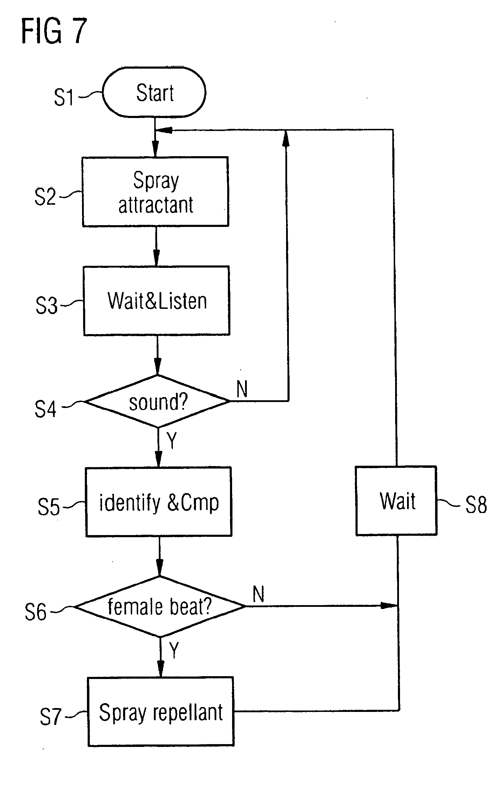

Figure 7 illustrates an embodiment of the method for repelling a vermin.

Often preparation of the apparatus in respective area, for example in a human's dormitory, sleeping room or any other kind of closed space is done in step S1 before activating the apparatus. The battery or energy storage is fully loaded and the device activated.

The apparatus releases in step S2 a small amount of attractant dosage into the air attracting any vermin for which the attractant compound is assigned to. After spraying the attractant into the area, the microphone is activated. The microphone listens and records any signal and particularly potential sound, for example a wing beat of vermin entering a pre-ordained area, substantially defined by the microphone's sensitivity. If after some time in step S4 no sound was recorded, a further small amount of attractive compound would be released.

If, however, a wing beat sound is recorded, the method will proceed with step S5 by identifying the sound and comparing the recorded signal with one or more reference signals. Those reference signals are assigned to sounds generated by predetermined types of vermin, for instance the wing beat sound of a female mosquito.

If the comparison proves unsuccessful, the vermin is considered not to be of the pre-defined type and the method continues with step S8. Waiting for some time might be useful to reduce the probability of faulty or incorrect measurements and decrease the amount of a sprayed attractant compound.

If a pre-detected type of vermin is identified in step S6 the repellent compound is sprayed into the area thereby eliminating the vermin in step S7. After some time in step S8, a new small amount of attractant compound is sprayed and the method is repeated with step S2.

In this embodiment, the attractant compound is released periodically to attract specific types of vermin into pre-defined area covered by the repellent means. A repellent compound is only sprayed into the area after a predetermined type of vermin is identified to be in that area. Nevertheless, the amount of attractant compound used can be reduced.

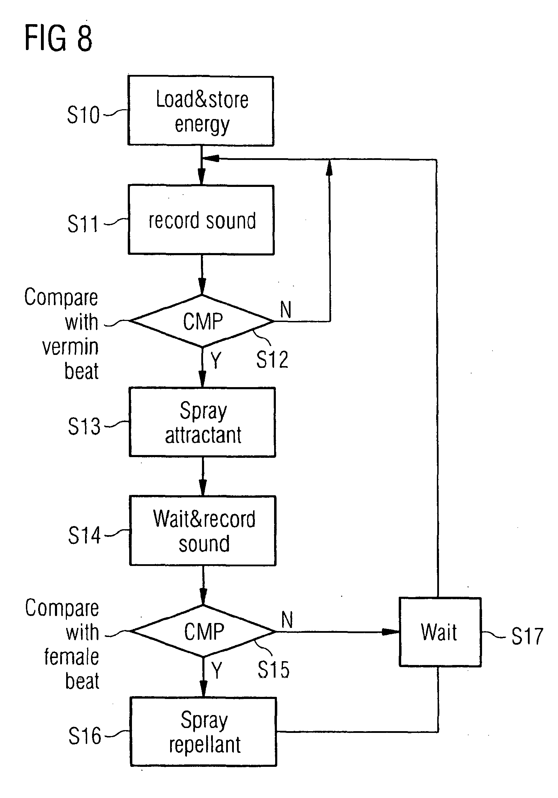

To this extent, Figure 8 shows a respective example. After preparation of the arrangement, a solar power cell charges in step S10 a battery pack and stores solar energy for later use and particular during night time. The apparatus is activated with use of a light sensor and the microphone records sound in step S11. Said recorded sound is compared with a reference signal, for instance corresponding to a reference sound, which may in turn correspond to a vermin's wing beat. If the comparison shows no correlation in step S12, a new sound is recorded and step S11 repeated.

If a recorded sound corresponds to vermin wing beat, the method continues with step S13 releasing a small dosage of an attractant compound. The compound is selected to be attractive to a specific type of vermin to be repelled. After the release of the attractant compound in step S13, some time is passed and then any sound is recorded again. The recorded sound is compared with a signal representing a predetermined sound, for example a wing beat generated by the predetermined type of vermin.

If a comparison proves successful, repellent means in step S16 are activated to repel the vermin. For example, a small amount of repellent compound may be released in the area in which the vermin is located, an optical sensor may be used to eliminate the vermin using a small laser or any other repellent or elimination method may be used.

After step S16, some time is waited in step S17 and then the method is repeated starting again with step S11. If the comparison in step S15 shows no correlation, meaning that the recorded sound does not seem to be generated by the predetermined type of the vermin, there is no need to activate the repellent means. Therefore, the method continues with step S11 after a predetermined time period has passed in step S17.

The present invention provides a possible solution to prevent an arbitrary killing of beneficial insects. It cannot only be used to repel vermin potentially dangerous for humans but repel any type of sound producing vermin or pests. Further, the presented apparatus and method can attract vermin away from humans in the area they may be sleeping.

The small amount of insecticide or repellent compound reduces the contamination and exposure to humans or beneficial insects. Further, specific repellent or attractive compounds can be used which may be suitable for children or particularly sensitive persons. The small current source needed for the arrangement provides access to locations without regular power supply.

### Reference list

- 1: arrangement
- 5: shield
- 6, 7: vaporizer
- 8, 8a, 8b: microphone
- 9: optical sensor
- 10: evaluation means, processor
- 13: battery, solar cell
- 11, 12: storage
- 51, 53: area
- 50: container
- 60, 70: valve
- 100, 100a, 100b: input terminals
- 105: supply terminal
- 106, 107: output terminals
- 210, 310, 311: filter
- 220: memory
- 230: comparator
- 240: FFT device
- 250: Analog to digital converter
- 314: reference source
- 312, 313: comparator
- 317: delay unit
- 315, 316: logic gate
- 9: optical sensor
- 9a: membrane
- 91: plate
- Vref1/2, Ref: reference

## Claims

1. Vermin repellent arrangement, comprising
- a shield (5) with a back area (53), with an open area (51), said open area (51) at least comprising a portion of the back area (53), and with a releasable container (50);
- an attraction storage (12) coupled to a first vaporizer (7) being arranged close to the container (50) at a back side (52) of the shield (5) and being adapted to provide a vapour of a compound attractive to at least one predefined type of vermin into the back area (53) in response to an attraction control signal;
- a repellent storage (11) coupled to a second vaporizer (6, 6a) being arranged vis-à-vis the container (50) and being adapted to provide a repellent dosage into the back area (53) in response to a repellent control signal;
- detection means (8a, 9), particularly optical or acoustical detection means, for detecting a vermin in the open area (51) and for providing a first detection signal in response thereto;
- means for acoustically detecting a vermin in the back area (53) and for providing a second detection signal in response thereto; and
- evaluation means (10, 10b) adapted
- to receive said first and second detection signals;
- to provide the attraction control signal when the first detection signal corresponds to the at least one pre-defined type of vermin; and
- to provide the repellent control signal in response to an evaluation of the first and the second detection signal whether the vermin has moved from the open area (51) to the back area (53).

2. The arrangement according to claim 1, wherein the detection means (8a, 9) and/or the means for acoustically detecting comprise a microphone (8, 8a, 8b), particularly a stereo-microphone arranged close to the first vaporizer (6).

3. The arrangement according to any of claims 1 to 2, wherein the evaluation means comprise filter means (310, 311, 410) having a passband characteristic corresponding to sound, particularly a wing beat sound caused by the at least one pre-defined type of vermin.

4. The arrangement according to claim 3, wherein the evaluation means (10) are adapted to compare at least a portion of a frequency spectrum of the processed, particularly filtered first and/or second detection signal with a reference frequency spectrum of sound caused by the at least one pre-defined type of vermin.

5. The arrangement according to any of claims 1 to 4, wherein the second vaporizer (6a) is adapted to vaporize the repellent dosage into a preferred direction within the back area (53).

6. The arrangement according to any of claims 1 to 5, wherein a gender of the at least one pre-defined type of vermin is female.

7. Method for repelling at least one type of vermin, comprising:
- detecting sound caused by a vermin in a pre-ordained area and providing a recorded signal thereof;
- releasing a compound into a second area covering at least partly the pre-ordained area, said compound being attractive to at least one type of vermin, the releasing being performed in response to a detection of a vermin within the second area by optical or acoustical means;
- performing a Fourier transformation on the recorded signal to obtain at least a portion of the frequency spectrum of the recorded signal.
- comparing the portion of the frequency spectrum with a reference signal, said reference signal being a reference frequency spectrum and being assigned to the at least one pre-defined type of vermin; and
- releasing a dosage of repellent into the pre-ordained area in response to the comparison.

8. The method of claim 7, wherein the recorded signal is filtered prior to the Fourier transformation with a filter having a passband characteristic corresponding to sound caused by the at least one type of vermin.

9. The method of claim 7 or 8, wherein comparing comprises comparing a level of the portion of the frequency spectrum with a reference level.

10. The method of any of claims 7 to 9, wherein detecting sound comprises detecting a wing beat sound caused by the vermin.

## Patentansprüche

1. Ungezieferabwehranordnung, Folgendes aufweisend:
- eine Abschirmung (5) mit einem hinteren Bereich (53), mit einem offenen Bereich (51), wobei der offene Bereich (51) zumindest einen Teil des hinteren Bereichs (53) umfasst, und mit einem freisetzbaren Behälter (50);
- einen Anziehungsspeicher (12), der an einen ersten Verdampfer (7) angeschlossen ist, der nahe am Behälter (50) auf einer Rückseite (52) der Abschirmung (5) angeordnet und dazu angepasst ist, einen Dampf einer Verbindung, die für mindestens eine vorbestimmte Art von Ungeziefer anziehend ist, im Ansprechen auf ein Anziehungssteuersignal in den hinteren Bereich (53) abzugeben;
- einen Abwehrmittelspeicher (11), der an einen zweiten Verdampfer (6, 6a) angeschlossen ist, der gegenüber dem Behälter (50) angeordnet und dazu angepasst ist, eine Abwehrmitteldosis im Ansprechen auf ein Abwehrmittelsteuersignal in den hinteren Bereich (53) abzugeben;
- Erfassungseinrichtungen (8a, 9), insbesondere optische oder akustische Erfassungseinrichtungen, zum Erfassen eines Ungeziefers im offenen Bereich (51) und zum Bereitstellen eines ersten Erfassungssignals im Ansprechen darauf;
- Einrichtungen zum akustischen Erfassen eines Ungeziefers im hinteren Bereich (53) und zum Bereitstellen eines zweiten Erfassungssignals im Ansprechen darauf; und
- Auswerteeinrichtungen (10, 10b), die dazu angepasst sind,
- das erste und zweite Erfassungssignal zu empfangen;
- das Anziehungssteuersignal bereitzustellen, wenn das erste Erfassungssignal der mindestens einen vorbestimmten Art von Ungeziefer entspricht; und
- das Abwehrmittelsteuersignal im Ansprechen auf eine Auswertung des ersten und des zweiten Erfassungssignals, ob sich das Ungeziefer vom offenen Bereich (51) in den hinteren Bereich (53) bewegt hat, bereitzustellen.

2. Anordnung nach Anspruch 1, wobei die Erfassungseinrichtungen (8a, 9) und/oder die Einrichtungen zum akustischen Erfassen ein Mikrofon (8, 8a, 8b), insbesondere ein Stereomikrofon umfassen, das nahe am ersten Verdampfer (6) angeordnet ist.

3. Anordnung nach einem der Ansprüche 1 bis 2, wobei die Auswerteeinrichtungen Filtereinrichtungen (310, 311, 410) mit einer Durchlassbereichkennlinie umfassen, die einem Geräusch, insbesondere einem Flügelschlaggeräusch entspricht, das von der mindestens einen vorbestimmten Art von Ungeziefer verursacht wird.

4. Anordnung nach Anspruch 3 wobei die Auswerteeinrichtungen (10) dazu angepasst sind, zumindest einen Teil eines Frequenzspektrums des verarbeiteten, insbesondere gefilterten ersten und/oder zweiten Erfassungssignals mit einem Referenzfrequenzspektrum von Geräuschen zu vergleichen, die von der mindestens einen vorbestimmten Art von Ungeziefer verursacht werden.

5. Anordnung nach einem der Ansprüche 1 bis 4, wobei der zweite Verdampfer (6a) dazu angepasst ist, die Abwehrmitteldosis in einer Vorzugsrichtung innerhalb des hinteren Bereichs (53) zu verdampfen.

6. Anordnung nach einem der Ansprüche 1 bis 5, wobei ein Geschlecht der mindestens einen vorbestimmten Art von Ungeziefer weiblich ist.

7. Verfahren zum Abwehren mindestens einer Art von Ungeziefer, Folgendes umfassend:
- Erfassen von durch ein Ungeziefer in einem vorher bestimmten Bereich verursachten Geräuschen und Bereitstellen eines Aufzeichnungssignals von diesen;
- Freisetzen einer Verbindung in einen zweiten Bereich, der den vorher bestimmten Bereich zumindest teilweise abdeckt, wobei die Verbindung für mindestens eine Art von Ungeziefer anziehend ist, wobei die Freisetzung im Ansprechen auf eine Erfassung eines Ungeziefers im zweiten Bereich durch optische oder akustische Einrichtungen erfolgt;
- Durchführen einer Fourier-Transformation am Aufzeichnungssignal, um zumindest einen Teil des Frequenzspektrums des Aufzeichnungssignals zu erhalten;
- Vergleichen des Teils des Frequenzspektrums mit einem Referenzsignal, wobei es sich bei dem Referenzsignal um ein Referenzfrequenzspektrum handelt und es der mindestens einen vorbestimmten Art von Ungeziefer zugeordnet ist; und
- Freisetzen einer Dosis Abwehrmittel in den vorher bestimmten Bereich im Ansprechen auf den Vergleich.

8. Verfahren nach Anspruch 7, wobei das Aufzeichnungssignal vor der Fourier-Transformation mit einem Filter mit einer Durchlassbereichkennlinie gefiltert wird, die dem Geräusch entspricht, das von der mindestens einen Art von Ungeziefer verursacht wird.

9. Verfahren nach Anspruch 7 oder 8, wobei das Vergleichen umfasst, einen Pegel des Teils des Frequenzspektrums mit einem Referenzpegel zu vergleichen.

10. Verfahren nach einem der Ansprüche 7 bis 9, wobei das Erfassen von Geräuschen umfasst, ein Flügelschlaggeräusch zu erfassen, das von dem Ungeziefer verursacht wird.

## Revendications

1. Agencement d'agent répulsif pour vermine, comprenant
- un écran (5) avec une zone arrière (53), avec une zone ouverte (51), ladite zone ouverte (51) comprenant au moins une portion de la zone arrière (53), et avec un conteneur (50) libérable;
- un stockage d'attraction (12) couplé à un premier vaporisateur (7) étant disposé près du conteneur (50) d'un côté arrière (52) de l'écran (5) et étant apte à fournir une vapeur d'un composé attractif pour au moins un type prédéfini de vermine dans la zone arrière (53) en réponse à un signal de commande d'atttraction;
- un stockage d'agent répulsif (11) couplé à un deuxième vaporisateur (6, 6a) étant disposé face au conteneur (50) et étant apte à fournir une dose d'agent répulsif dans la zone arrière (53) en réponse à un signal de commande d'agent répulsif;
- des moyens de détection (8a, 9), en particulier des moyens de détection optiques ou acoustiques, permettant de détecter une vermine dans la zone ouverte (51) et de fournir un premier signal de détection en réponse à cela;
- des moyens permettant de détecter acoustiquement une vermine dans la zone arrière (53) et de fournir un deuxième signal de détection en réponse à cela; et
- des moyens d'évaluation (10, 10b) aptes
- à recevoir ledit premier et ledit deuxième signal de détection;
- à fournir le signal de commande d'attraction lorsque le premier signal de détection correspond à l'au moins un type prédéfini de vermine; et
- à fournir le signal de commande d'agent répulsif en réponse à une évaluation du premier et du deuxième signal de détection indiquant si la vermine s'est déplacée de la zone ouverte (51) à la zone arrière (53) .

2. L'agencement selon la revendication 1, dans lequel les moyens de détection (8a, 9) et/ou les moyens de détection acoustiques comprennent un microphone (8, 8a, 8b), en particulier un microphone stéréo disposé près du premier vaporisateur (6).

3. L'agencement selon l'une quelconque des revendications 1 à 2, dans lequel les moyens d'évaluation comprennent des moyens de filtrage (310, 311, 410) ayant une caractéristique de bande passante correspondant au son, en particulier à un son de battement d'aile causé par l'au moins un type prédéfini de vermine.

4. L'agencement selon la revendication 3, dans lequel les moyens d'évaluation (10) sont aptes à comparer au moins une partie d'un spectre de fréquence du premier et/ou du deuxième signal de détection traité, en particulier filtré, avec un spectre de fréquence de référence de son causé par l'au moins un type prédéfini de vermine.

5. L'agencement selon l'une quelconque des revendications 1 à 4, dans lequel le deuxième vaporisateur (6a) est apte à vaporiser la dose d'agent répulsif dans une direction préférée au sein de la zone arrière (53).

6. L'agencement selon l'une quelconque des revendications 1 à 5, dans lequel un genre de l'au moins un type prédéfini de vermine est femelle.

7. Procédé de répulsion d'au moins un type de vermine, comprenant:
- la détection de son causé par une vermine dans une zone préétablie et la fourniture d'un signal enregistré de celui-ci;
- la libération d'un composé dans une deuxième zone couvrant au moins partiellement la zone préétablie, ledit composé étant attractif pour au moins un type de vermine, la libération étant effectuée en réponse à une détection d'une vermine au sein de la deuxième zone par des moyens optiques ou acoustiques;
- l'exécution d'une transformation de Fourier sur le signal enregistré pour obtenir au moins une partie du spectre de fréquence du signal enregistré;
- la comparaison de la partie du spectre de fréquence avec un signal de référence, ledit signal de référence étant un spectre de fréquence de référence et étant assigné à l'au moins un type prédéfini de vermine; et
- la libération d'une dose d'agent répulsif dans la zone préétablie en réponse à la comparaison.

8. Le procédé de la revendication 7, dans lequel le signal enregistré est filtré avant la transformation de Fourier avec un filtre ayant une caractéristique de bande passante correspondant au son causé par l'au moins un type de vermine.

9. Le procédé de la revendication 7 ou 8, dans lequel la comparaison comprend la comparaison d'un niveau de la partie du spectre de fréquence avec un niveau de référence.

10. Le procédé de l'une quelconque des revendications 7 à 9, dans lequel la détection de son comprend la détection d'un son de battement d'aile causé par la vermine.
